# EUROPÄISCHE PATENTSCHRIFT

(11) **EP 0 357 964 B1**
(45) Veröffentlichungstag und Bekanntmachung des Hinweises auf die Patenterteilung: **07.12.1994**
(21) Anmeldenummer: 89114404.0
(22) Anmeldetag: 04.08.1989
(51) Int. Cl.: G05D 16/20

(54) **Proportionalventil**
Proportional valve
Vanne proportionnelle

(30) Priorität: 03.09.1988 DE 3829992
(43) Veröffentlichungstag der Anmeldung: 14.03.1990
(73) Patentinhaber: ROBERT BOSCH GMBH, 70442 Stuttgart (DE)
(72) Erfinder: Sanzenbacher, Hermann, D-7141 Schwieberdingen (DE); Schempp, Roland, Ing., D-7143 Vaihingen/Enz (DE); Pfuhl, Berhold, Dipl.-Ing. (FH), D-7145 Markgröningen (DE); Bangert, Hans, Dipl.-Ing., D-7143 Vaihingen/Enz 2 (DE); Leutner, Volkmar, Dipl.-Ing., D-7251 Friolzheim (DE)

(56) Entgegenhaltungen:
- DE-A- 2 840 831
- DE-A- 3 047 110
- DE-A- 3 136 174
- US-A- 3 434 407
- US-A- 4 744 389
- ENERGIE FLUIDE. vol. 24, no. 9, Dezember 1985, PARIS FR Seiten 4 - 6;"REGULATEURS DE PRESSION ELECTROPNEUMATIQUES A COMMANDE ELECTRONIQUE INTEGREE"

## Beschreibung

Die Erfindung betrifft ein Proportionalventil der im Oberbegriff des Anspruchs 1 definierten Gattung.

Bei solchen als Proportionaldruckventile in Schieberbauweise verwendeten Proportionalventilen wird die Ansteuerung des Proportionalmagneten durch den Regelfehler zwischen Druckist- und Drucksollwert korrigiert, wodurch das Proportionalventil im geschlossenen Regelkreis arbeitet und damit hinsichtlich der Regelgröße "Druck" eine hohe Genauigkeit und Dynamik aufweist. Je nachdem an welcher Anschlußöffnung die Regelgröße erfaßt wird, kann ein solches Proportionalventil als Druckbegrenzer oder der Druckregler (Druckminderer) arbeiten.

Bei einem bekannten Proportionalventil dieser Art (DE 31 36 174 A1) steht der auf Druck ansprechende Teil des im Magnetgehäuse angeordneten Druckaufnehmers oder Drucksensors über das den Magnetanker des Elektromagneten axial verschieblich aufnehmende Druckrohr mit dem Ventilgehäuse und dort über geeignete Bohrungen mit der Anschlußöffnung in Verbindung, an welcher der Druck erfaßt werden soll. Der Ankerraum ist damit ständig mit dem zu regelnden Druck beaufschlagt, so daß das Magnetdruckrohr eine Festigkeit aufweisen muß, die der Belastung mit Maximaldruck entspricht.

Es sind auch schon Proportionalwegeventile in Schieberbauweise bekannt (DE 28 40 831 C2), bei denen dem Steuerschieber ein Wegaufnehmer oder Wegsensor zur Erfassung des Steuerschieberhubs zugeordnet ist. Der Regelfehler zwischen dem Lageistwert und dem Lagesollwert des Steuerschiebers korrigiert die Ansteuerung des Proportionalmagneten. Ein solches Proportionalwegeventil wird als Volumenstrom- oder Mengenregelventil verwendet.

Ferner ist aus der Zeitschrift ENERGIE FLUIDE, No 9, Dec. 1985, Seiten 4 bis 6, ein elektropneumatischer Druckregler bekannt, der mit einem integrierten Drucksensor arbeitet und einen Sekundärdruck im Auslaß proportional zu einem elektrischen Eingangssignal steuert. Dieser Druckregler arbeitet mit einem Sitzventilkörper, über dessen Führungsrohr vom Einlaß Steuerdruckmittel zu einem vorsteuernden 3-Wege-3-Stellungs-Magnetventil abgezweigt wird, das die Verbindungen zu einem Servokolben steuert. Bei diesem zweistufigen Druckregler mißt der Drucksensor den Druck in einer zugeordneten Druckkammer am Servokolben. Im vorsteuernden Magnetventil kann dessen Druckrohr hier dem vollen Eingangsdruck ausgesetzt sein, der jedoch nur in einem geringen Druckbereich von 0 bis 10 bar liegt. Die zweistufige Ausführung des Druckreglers mit einem gepulsten 3/3-Magnetventil und Sitzventilkörpern ergibt eine relativ aufwendige Bauweise.

Weiterhin ist es aus der DE 30 47 110 A1 bekannt, bei einem Proportional-Druckregelventil den Magnetanker mit einem Wegeaufnehmer zu koppeln und den Hub des Sitzventilkörpers im Druckregelventil in einem Lageregelkreis zu steuern. Ein zusätzlicher Drucksensor ist hier nicht vorgesehen.

### Vorteile der Erfindung

Das erfindungsgemäße Proportionalventil mit den kennzeichnenden Merkmalen des Anspruchs 1 hat den Vorteil, daß durch den im Ventilgehäuse verlaufenden separaten Druckkanal für den Druckaufnehmer das den Magnetanker aufnehmende Druckrohr umgangen wird. Dadurch braucht das Magnetdruckrohr nicht für den maximalen Betriebsdruck ausgelegt zu werden, sondern nur für einen Druck, der wesentlich niedriger liegt, was mit üblichen Magnetdruckrohren realisiert werden kann.

Wird noch der Druckaufnehmer im Magnetgehäuse von außen her radial eingesetzt und ein den Druckregler aufnehmendes Elektronikgehäuse auf dem Magnetgehäuse so befestigt, daß es den Druckaufnehmer überdeckt, so liegen die elektrischen Signalausgänge des Druckaufnehmers geschützt im Elektronikgehäuse, und kürzeste Signalleitungen sind zu dem Druckregler gegeben. Dadurch werden äußere Störeinflüsse fast vollständig beseitigt

Durch die in den weiteren Ansprüchen aufgeführten Maßnahmen sind vorteilhafte Weiterbildungen und Verbesserungen des im Anspruch 1 angegebenen Proportionalventils möglich.

Wird im Magnetgehäuse noch ein Wegaufnehmer integriert und ein Lageregler vorgesehen und Druck- und Lageregler elektrisch so miteinander verkoppelt, daß jeweils das Ausgangssignal mit der kleineren elektrischen Stellgröße maßgeblich für den Proportionalmagneten ist, so kann das erfindungsgemäße Ventil ohne konstruktive Änderung und nur durch entsprechende Beeinflussung der Steuer- und Regelelektronik einerseits als Mengenventil Volumenströme steuern und andererseits als Druckventil Drücke begrenzen oder mindern. Beim Einsatz als Mengenventil hat der Druck eine begrenzende Wirkung. Wird der eingestellte Drucksollwert erreicht, so wirkt der Ausgang des Druckreglers begrenzend auf den Lagesollwert. Das Proportionalventil geht automatisch von einer Mengenfunktion in eine Druckregelfunktion über. Wird ein maximaler Lagesollwert vorgegeben, so kann das erfindungsgemäße Proportionalventil als reines Druckregelventil arbeiten.

Eine einfache Realisierung der Kopplung von Lageregler und Druckregler wird gemäß einer bevorzugten Ausführungsform der Erfindung dadurch erzielt, daß der Ausgang des Lagereglers über eine Verstärkerstufe mit dem Proportionalmagneten verbunden und ein Begrenzer mit zwei Eingängen und mit einem Ausgang vorgesehen wird, dessen einer Eingang mit dem Lagesollwertsignal und dessen anderer Eingang mit dem Ausgangssignal des Druckreglers belegt und dessen Ausgang mit dem Sollwerteingang des Lagereglers verbunden wird. Der Begrenzer ist derart ausgebildet, daß jeweils das kleinste Eingangssignal auf seinen Ausgang durchgeschaltet ist. Bei Vorgabe des maximalen Lagesollwerts steuert der Ausgang des Druckreglers den Lageregelkreis, und der Druckregelkreis arbeitet als übergeordneter Regelkreis (Kaskade). Wird der Drucksollwert maximal vorgegeben, so arbeitet ausschließlich der Lageregelkreis und das Proportionalventil hat Mengenfunktion. Wird der Drucksollwert erreicht, so wirkt der Druckregelkreis begrenzend.

Werden gemäß einer weiteren Ausführungsform der Erfindung im Ventilgehäuse drei Anschlußöffnungen vorgesehen und wird der Steuerschieber mit zwei Steuerkanten zum Steuern der drei Anschlußöffnungen versehen, so kann das Proportionalventil einerseits als 3/2-Wege-Proportionalventil mit Mengenfunktion und andererseits als Druckregelventil mit Druckminderfunktion eingesetzt werden, je nachdem, wie die Sollwerte für den Druck- und den Lageregler eingestellt werden. Durch den im Ventilgehäuse verlaufenden separaten Druckkanal wird der Druckaufnehmer vom Druck an der dritten Anschlußöffnung beaufschlagt, die in einem N6-Anschlußlochbild dem A-Anschluß entspricht.

Wird gemäß einer weiteren Ausführungsform der Erfindung, bei welcher die erste und die dritte Anschlußöffnung über einen sperrbaren Kanal verbunden sind und die dritte Anschlußöffnung von der Anschlußseite her absperrbar ist, der Sollwert des Lagereglers maximal gewählt und damit das erfindungsgemäße Proportionalventil als Druckventil betrieben, so sind zwei Einsatzfälle möglich. Bleibt der Verbindungskanal zwischen den beiden Anschlußöffnungen gesperrt und die dritte Anschlußöffnung mit einem hydraulischen Arbeitskreis verbunden, so arbeitet das Ventil durch die Zweikantensteuerung des Steuerschiebers als Druckregel- oder Druckminderventil. Der Druck an der dritten Anschlußöffnung bzw. in dem damit verbundenen hydraulischen Arbeitskreis wird auf einen vorgegebenen Druck unterhalb des Betriebsdruckes der Druckquelle geregelt. Wird jedoch die Sperrung des Verbindungskanals aufgehoben und die dritte Anschlußöffnung verschlossen, so ist nur noch eine Steuerkante des Steuerschiebers wirksam. Das Proportionalventil arbeitet als Druckbegrenzungsventil und begrenzt den Druck am Eingang der ersten Anschlußöffnung auf einen vorgegebenen Wert.

Wird im Ventilgehäuse eine vierte ungesteuerte Anschlußöffnung vorgesehen, welche im N6-Anschlußlochbild dem Anschluß B entspricht, und wird der Druckkanal mit der vierten Anschlußöffnung verbindbar ausgebildet, so kann der Druckaufnehmer auch von einem externen Druck beaufschlagt werden. Wird die vierte Anschlußöffnung nicht belegt, so muß sie abgesperrt werden. Wird sie mit Druck belegt, so muß die Verbindung des Druckkanals zu der dritten Anschlußöffnung gesperrt werden.

Das erfindungsgemäße Proportionalventil stellt eine kompakte und wenig störanfällige Baueinheit dar, die mit verschiedenen Funktionen, wie Volumenstromregelung, Druckregelung und Druckbegrenzung als Pilot- und als Hauptsteuerventil verwendet werden kann. Doppelfunktionen, wie z.B. Volumenstromregelung mit Druckbegrenzung, sind möglich.

### Zeichnung

Die Erfindung ist anhand von in der Zeichnung dargestellten Ausführungsbeispielen im folgenden näher beschrieben. Es zeigen:
- Fig. 1: ein Blockschaltbild zur Erläuterung der Funktion des als 3/2-Proportional-Wegeventil eingesetzten Proportionalventils,
- Fig. 2: einen Längsschnitt des Proportionalventils, teilweise schematisiert,
- Fig. 3: eine vergrößerte Darstellung eines Ausschnitts des Ventilgehäuses des Proportionalventils in Fig. 2 mit teilweise geänderter Steuerbohrungsführung zur Erläuterung der Steuerfunktion des Steuerschiebers.
- Fig. 4: einen Längsschnitt des modifizierten Ventilgehäuses ohne Steuerschieber des Proportionalventils in Fig. 2 vergrößert dargestellt.

### Beschreibung des Ausführungsbeispiels

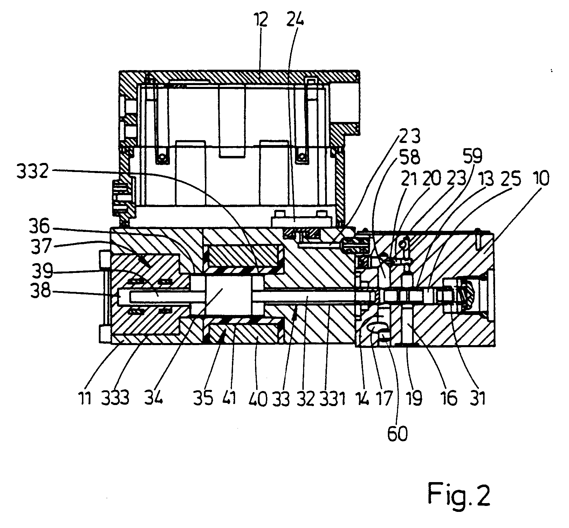

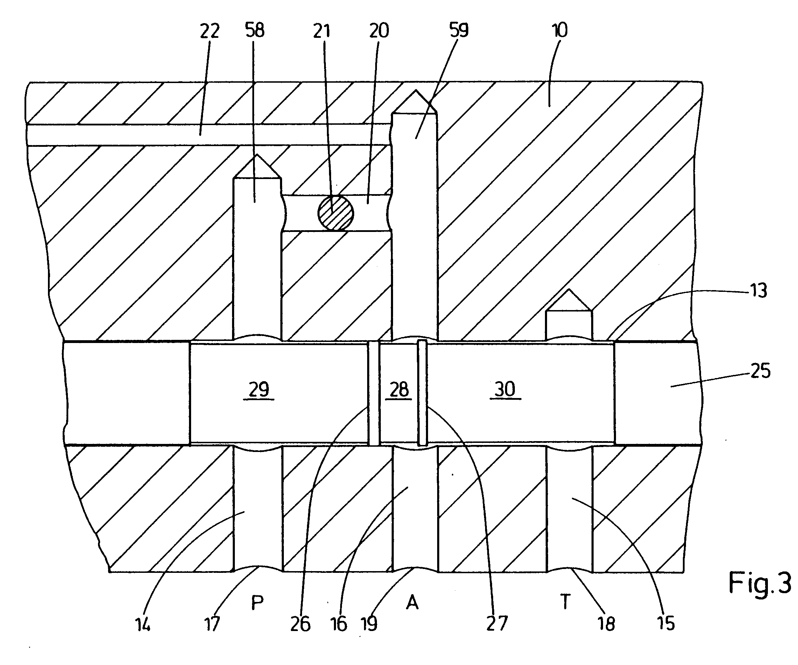

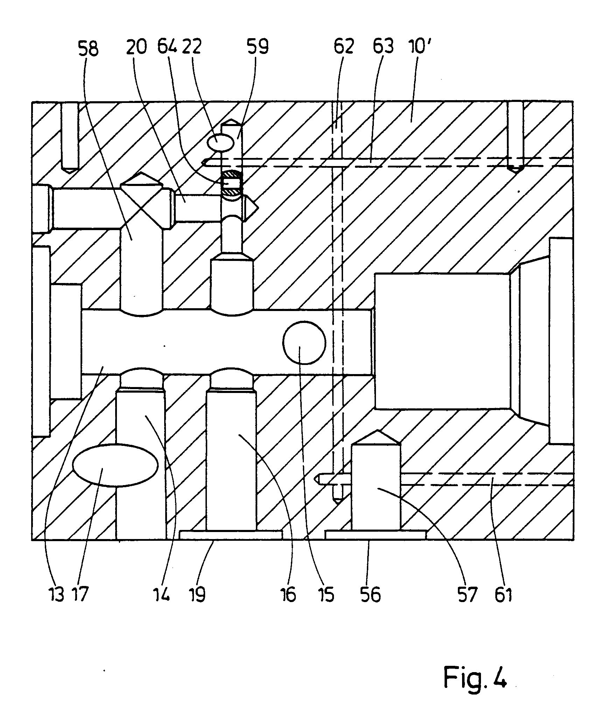

Das in Fig. 2 im Längsschnitt dargestellte Proportionalventil weist ein Ventilgehäuse 10 mit genormtem Lochbild (N6) auf, an dem ein Magnetgehäuse 11 axial angeflanscht ist. Am Magnetgehäuse 11 ist seitlich ein radial wegstehendes Elektronikgehäuse 12 befestigt. Das Ventilgehäuse 10 weist eine axial verlaufende Mittelbohrung 13 auf, in welcher drei radiale Steuerbohrungen 14,15,16 münden, die zu drei Anschlußöffnungen 17,18,19 führen. In Fig. 2 sind lediglich die Steuerbohrungen 14 und 16 und die zugeordneten Anschlußöffnungen 17 und 19 zu sehen. Die Steuerbohrung 15 (Fig. 4) mit zugeordneter Anschlußöffnung 18 ist - um 90° in die Ebene der Steuerbohrungen 14 und 16 gedreht - in Fig. 3 dargestellt. Ebenso ist die Anschlußöffnung 17 in Fig. 3 in die Darstellungsebene gedreht. Wie Fig. 2 zeigt, liegt sie winkelig versetzt zur Steuerbohrung 14, die an ihrer Austrittsstelle am Ventilgehäuse 10 durch ein Stopfen 60 verschlossen ist. Die erste Anschlußöffnung 17 ist zum Anschluß an eine Druckquelle (P), die zweite Anschlußöffnung 18 zum Anschluß an einen Entlastungsraum (T) und die dritte Anschlußöffnung 19 zum Anschluß an einen hydraulischen Arbeitskreis (A) vorgesehen. Die erste Steuerbohrung 14 und die dritte Steuerbohrung 16 sind durch eine axiale Querbohrung 20 miteinander verbunden, die von der Stirnseite des Ventilgehäuses 10 her eingebracht ist und zwei radiale, über die Mittelbohrung 13 hinausgehende Verlängerungsabschnitte 58,59 der Steuerbohrungen 14,16 miteinander verbindet. Die Querbohrung 20 kann mittels einer Dichtungsschraube 21 gesperrt oder freigegeben werden. In der dritten Steuerbohrung 16 mündet noch ein Druckkanal 22, und zwar in deren Verlängerungsabschnitt 59, der in Fig. 3 um 90° um die Längsachse der dritten Steuerbohrung 16 gedreht in der Querschnittsebene der Steuerbohrungen 14 und 16 dargestellt ist. Dieser Druckkanal 22 mündet an der von dem Magnetgehäuse 11 belegten Stirnseite des Ventilgehäuses 10 und korrespondiert dort mit einer Anschlußbohrung 23, die im Magnetgehäuse 11 zu einem Druckaufnehmer oder Drucksensor 24 führt, der in dem Magnetgehäuse 11 integriert, und zwar auf der von dem Elektronikgehäuse 12 belegten Seite angeordnet ist. Über die Anschlußbohrung 23 und den Druckkanal 22 steht der auf Druck ansprechende Teil des Drucksensors 24 mit dem Innern der Steuerbohrung 16 in Verbindung, so daß er den in der dritten Steuerbohrung 16 herrschenden Flüssigkeitsdruck erfaßt.

In der Mittelbohrung 13 ist ein Steuerschieber 25 axial verschieblich geführt, der zwei Steuerkanten 26,27 zur Steuerung der drei Anschlußöffnungen 17 bis 19 aufweist. Beiderseits der beiden Steuerkanten 26,27 ist der Steuerschieber 25 jeweils mit einer Ringnut 28 - 30 versehen, wobei die Ringnut 28 zwischen den beiden Steuerkanten 26,27 eingeschlossen ist, die Ringnut 29 sich an die Steuerkante 26 und die Ringnut 30 sich an die Steuerkante 28 anschließt. Jede Ringnut 28 - 30 erstreckt sich über einen bestimmten axialen Bereich des Steuerschiebers 25. Auf der einen Stirnseite wird der Steuerschieber 25 von einer Rückstellfeder 31 belastet, die sich gehäuseseitig abstützt. An der anderen Stirnseite des Steuerschiebers 25 greift ein Stößel 32 an, der in einer mit der Mittelbohrung 13 fluchtenden Axialbohrung 33 im Magnetgehäuse 11 gleitend einliegt und mit dem Magnetanker 34 eines Proportionalmagneten 35 starr verbunden ist. Die Axialbohrung 33 ist als Stufenbohrung mit drei Bohrungsabschnitten 331,332 und 333 ausgeführt. Der im Durchmesser kleinste Bohrungsabschnitt 331 nimmt den Stößel 32 und der sich daran anschließende Bohrungsabschnitt 332 mit mittlerem Durchmesser ein Magnetdruckrohr 36 auf, in dem der Magnetanker 34 axial verschieblich geführt ist. In dem dritten Bohrungsabschnitt 333 mit größtem Durchmesser ist ein Wegaufnehmer oder Wegsensor 37 eingesetzt, der den Bohrungsabschnitt 332 stirnseitig verschließt. Der induktiv arbeitende Wegsensor 37 weist eine Zentralbohrung 38 auf, in der ein mit dem Magnetanker 34 axial verschieblicher Ferritkern 39 einliegt. Das an dem Wegsensor 37 abnehmbare elektrische Signal ist ein Maß für den Verschiebeweg von Magnetanker 34 und Stößel 32. Das Magnetdruckrohr 36 ist von einer Magnetwicklung 40 umgeben, die auf einem koaxial auf dem Magnetdruckrohr 36 sitzenden Spulenträger 41 aufgewickelt ist. Die Anschlüsse der Magnetwicklung 40 (nicht dargestellt) sind ebenso wie die elektrischen Anschlüsse von Drucksensor 24 und Wegsensor 37 in das Elektronikgehäuse 12 geführt.

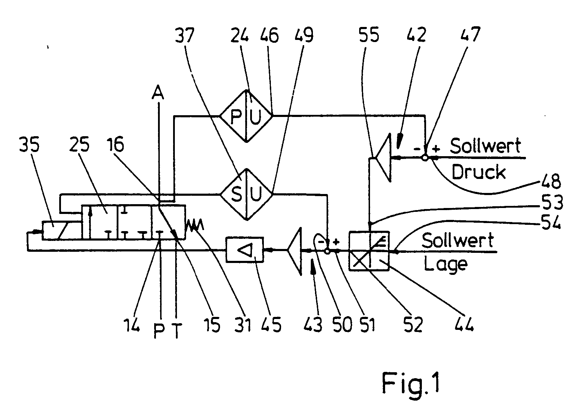

Im Elektronikgehäuse 12 ist die gesamte Regelelektronik untergebracht, die gemäß dem Blockschaltbild in Fig. 1 einen Druckregler 42, einen Lageregler 43 einen Begrenzer 44 und eine Verstärkerendstufe 45 umfaßt. Der Ausgang der Endstufe 45 steuert die Magnetwicklung 40 des Proportionalmagneten 35 an. Der Ausgang 46 des Drucksensors 24, an dem ein dem Druck in der Steuerbohrung 16 proportionales elektrisches Ausgangssignal ansteht, ist dem Istwerteingang 47 des Druckreglers 42 zugeführt. Am Sollwerteingang 48 des Druckreglers 42 liegt ein elektrisches Drucksollwertsignal an, das proportional einem vorgegebenen Solldruck ist. Zwischen elektrischem Drucksollwertsignal und vorgegebenem Solldruck besteht beispielsweise ein linearer Zusammenhang, wobei z.B. einem Drucksollwert von 100 bar eine Signalspannung von 4 V entspricht.

Der Ausgang 49 des Wegaufnehmers oder Wegsensors 37, an dem ein dem Steuerschieberhub proportionales elektrisches Ausgangssignal auftritt, ist mit dem Istwerteingang 50 des Lagereglers 43 verbunden. Der Ausgang des Lagereglers 43 ist der Verstärkerendstufe 45 zugeführt. An dem Sollwerteingang 51 des Lagereglers 43 liegt der Ausgang 52 des Begrenzers 44, der weiterhin zwei Eingänge 53 und 54 aufweist. An dem Eingang 53 ist der Ausgang 55 des Druckreglers 42 angeschlossen, während an dem Eingang 54 des Begrenzers 44 ein elektrisches Lagesollwertsignal liegt, das proportional einem vorgegebenen Lagesollwert oder Steuerschieberhub ist. Zwischen dem vorgegebenen Lagesollwert und dem elektrischen Lagesollwertsignal besteht ebenfalls ein linearer Zusammenhang, wobei beispielsweise ein gewünschter Steuerschieberhub von 1 mm einer Signalspannung von 5 V und ein Steuerschieberhub von 2 mm einer Signalspannung von 10 V entspricht. Der Begrenzer 44 ist derart ausgebildet, daß jeweils das kleinste Eingangssignal an seinen beiden Eingängen 52,53 auf seinen Ausgang 54 durchgeschaltet ist. Die elektrischen Sollwertsignale werden dem Druckregler 42 und dem Lageregler 43 extern über einen zentralen Anschlußstecker (nicht dargestellt) am Elektronikgehäuse 12 zugeführt. Über den gleichen Stecker erfolgt die Stromversorgung für die gesamte Regelelektronik und den Proportionalmagneten 35.

In dem in der Zeichnung dargestellten Aufbau arbeitet das Proportionalventil als 3/2-Proportionalwegeventil mit übergeordnetem Druckregelkreis. Proportional dem Lagesollwert ergibt sich über den Lageregelkreis eine Steuerschieberposition, welche die Öffnungsquerschnitte zwischen den Steuerbohrungen 14 und 16 bzw. 16 und 15 bestimmt. Beide Steuerkanten 26 und 27 des Steuerschiebers 25 sind wirksam, wobei die Steuerkante 25 den Öffnungsquerschnitt zwischen den Steuerbohrungen 14 und 16 und die Steuerkante 27 den Öffnungsquerschnitt zwischen den Steuerbohrungen 16 und 15 bestimmt.

Der in der Steuerbohrung 16 anstehende Druck wird vom Drucksensor 24 erfaßt. Solange das vom Drucksensor 24 ausgegebene elektrische Druckistwertsignal den vorgegebenen Solldruck noch nicht erreicht hat, arbeitet das Proportionalventil mit Mengenfunktion, d.h. es stellt einen dem Steuerschieberhub entsprechenden Volumenstrom in der Steuerbohrung 16 ein, der über die Anschlußöffnung 19 einem Arbeitskreis A zufließt. Ist der Lagesollwert jedoch so vorgegeben, daß der Drucksollwert im Druckregler 42 vor dem Lagesollwert im Lageregler 43 erreicht wird, so wirkt der Ausgang des Druckreglers 42 auf den Sollwerteingang 51 des Lagereglers 43 - da der Begrenzer 44 jeweils das kleinste Eingangssignal auf seinen Ausgang 52 durchschaltet - und begrenzt den Steuerschieberhub und damit den Druck in der Steuerbohrung 16. Das Proportionalventil ist nunmehr von seiner Mengenfunktion in eine Druckregelfunktion übergegangen.

Da am Begrenzer 44 das Eingangssignal mit dem niedrigsten Wert dominiert, ist es natürlich auch möglich, das Proportionalventil als reines Druckventil arbeiten zu lassen. Hierzu ist lediglich am Eingang 54 des Begrenzers 44 ein maximaler Lagesollwert vorzugeben, der bezüglich der Größe des elektrischen Sollwertsignals oberhalb der Signalspannung liegt, die durch Einstellung des Drucksollwerts am Druckregler 42 vorgegeben wird. In diesem Fall wirkt ausschließlich das Ausgangssignal des Druckreglers 42 auf den Lageregler 43 und die Einstellung des Steuerschiebers 25 erfolgt entsprechend dem gewünschten Druck in der Steuerbohrung 16.

Betreibt man in dieser Weise das Proportionalventil als Druckventil, so sind zwei Einsatzfälle möglich. Bei der in der Zeichnung dargestellten Zweikantensteuerung des Steuerschiebers 25 wird eine Druckregel- bzw. Druckminderfunktion erreicht. Der Druck in der Steuerbohrung 16 wird auf einem vorgegebenen Solldruck eingeregelt, der unterhalb des in der Steuerbohrung 14 herrschenden Druckes liegt. Wird hingegen die Anschlußöffnung 19 verschlossen, und wird die Dichtungsschraube 21 in der Querbohrung 20 entfernt, so stehen die Steuerbohrungen 14 und 16 unabhängig von der Steuerschieberposition in ständiger Verbindung. Damit wird der an der Anschlußöffnung 17 herrschende Druck vom Drucksensor 24 erfaßt. Bei Ansteuerung des Proportionalmagneten 35 führt der Steuerschieber 25 eine sog. Einkantensteuerung durch, bei welcher lediglich die Steuerkante 27 wirksam ist und den Öffnungsquerschnitt zwischen den Steuerbohrungen 16 und 15 steuert. Das Druckventil arbeitet als Druckbegrenzungsventil und begrenzt den an der Anschlußöffnung 17 herrschende Druck auf einen vom Drucksollwertsignal am Sollwerteingang 48 des Druckreglers 42 vorgegebenen Solldruck.

In Fig. 4 ist das Ventilgehäuse 10′ des Proportionalventils in etwas modifizierter Ausführung vergrößert dargestellt. Soweit Bohrungen, Kanäle und Anschlußöffnungen mit denen in Fig. 2 und 3 übereinstimmen, sind sie mit gleichen Bezugszeichen belegt. Im Ventilgehäuse 10 ist eine vierte, allerdings ungesteuerte Anschlußöffnung 56 vorgesehen, die im N6-Lochbild an der Stelle des Anschlusses B liegt. Die Anschlußöffnung 56 begrenzt eine Sackbohrung 57, die über insgesamt drei Verbindungsbohrungen 61,62,63 mit dem Druckkanal 22 verbunden ist. Die Verbindungsbohrungen 61 und 63 sind als Sackbohrungen von der einen Stirnseite des Ventilgehäuses 10 her eingebracht und dort verschlossen. Die Verbindungsbohrung 61 durchdringt dabei die Sackbohrung 57 und die Verbindungsbohrung 63 den radialen Verlängerungsabschnitt 59 der Steuerbohrung 16. Die beiden Verbindungsbohrungen 61 und 63 sind durch die als Sackbohrung radial eingebrachte und stirnseitig verschlossene Verbindungsbohrung 62 miteinander verbunden, die beide Verbindungsbohrungen 61,63 durchdringt. Die Verbindungsbohrung 62 läuft dabei versetzt zur Mittelbohrung 13 und schneidet diese nicht. Die Verbindungsbohrung 63 ist so gelegt, daß ihre Mündungsstelle im radialen Verlängerungsabschnitt 59 nahe der Mündungsstelle des Druckkanals 22 liegt. Mittels eines in den Verlängerungsabschnitt 59 eingebrachten Stopfens 64 können die Mündungsstellen von Druckkanal 22 und Verbindungsbohrung 63 gegenüber der Steuerbohrung 16 bzw. der Mittelbohrung 13 abgesperrt werden. Der Drucksensor 24 kann somit mit einem an der vierten Anschlußöffnung 56 anstehenden externen Druck beaufschlagt werden. Wird eine Druckerfassung an den anderen beiden Anschlußöffnungen 17,19 gewünscht, so ist der Stopfen 64 zu entfernen und die vierte Anschlußöffnung 56 zu verschließen.

## Patentansprüche

1. Proportionalventil mit einem Anschlußöffnungen (17, 18, 19) aufweisenden Ventilgehäuse (10), mit einem in einer Mittelbohrung (13) des Ventilgehäuses (10) axial verschieblichen Steuerschieber (25) zum Steuern der Anschlußöffnungen (17, 18, 19), mit einem den Steuerschieber (25) betätigenden Proportionalmagneten (35), dessen Magnetanker (34) in einem Druckrohr (36) geführt ist und dessen Magnetgehäuse (11) mit dem Ventilgehäuse (10) verbunden ist, mit einem im Magnetgehäuse (11) integrierten Druckaufnehmer (24), der mit Druck von einer Anschlußöffnung (19) beaufschlagt wird und ein druckproportionales elektrisches Ausgangssignal generiert, und mit einem Druckregler (42), dem ein das elektrische Ausgangssignal des Druckaufnehmers (24) als Druckistwertsignal und ein einem vorgegebenen Solldruck entsprechendes elektrisches Drucksollwertsignal zugeführt ist, dadurch gekennzeichnet, daß zur Druckbeaufschlagung des Druckaufnehmers (24) ein mit der Anschlußöffnung (19) in Verbindung stehender, im Ventilgehäuse (10) separat und getrennt vom Steuerschieber (25) und der zugeordneten Mittelbohrung (13) verlaufender Druckkanal (22) vorgesehen ist, der an der Stoßstelle von Ventil- und Magnetgehäuse (10, 11) mündet und dort mit einer im Magnetgehäuse (11) bis hin zum Druckaufnehmer (24) außerhalb des Druckrohres (36) verlaufenden Anschlußbohrung (23) kommuniziert.

2. Ventil nach Anspruch 1, dadurch gekennzeichnet, daß der Druckaufnehmer (24) im Magnetgehäuse (11) radial von außen eingesetzt ist und von einem seitlich auf das Magnetgehäuse (11) aufgesetzten Elektronikgehäuse (12) zur Aufnahme mindestens des Druckreglers (42) überdeckt ist.

3. Ventil nach Anspruch 1 oder 2, dadurch gekennzeichnet, daß im Magnetgehäuse (11) ein den Steuerschieberhub sensierender Wegaufnehmer (37) integriert ist, der ein steuerschieberhubproportionales elektrisches Ausgangssignal generiert, daß ein Lageregler (43) vorgesehen ist, dem das elektrische Ausgangssignal des Wegaufnehmers (37) als Lageistwertsignal und ein dem vorgegebenen Lagesollwert proportionales elektrisches Lagesollwertsignal zugeführt ist, und daß Druck- und Lageregler (42,43) elektrisch so miteinander verkoppelt sind, daß jeweils das Ausgangssignal mit der kleineren elektrischen Stellgröße maßgeblich für den Proportionalmagneten (35) ist.

4. Ventil nach Anspruch 3, dadurch gekennzeichnet, daß der Ausgang des Lagereglers (43) über eine Verstärkerstufe (45) mit dem Proportionalmagneten (35) verbunden ist, daß ein Begrenzer (44) mit zwei Eingängen (53,54) und einem Ausgang (52) vorgesehen ist, der derart ausgebildet ist, daß jeweils das kleinste Eingangssignal auf den Ausgang (52) durchgeschaltet ist, daß ein Eingang (54) des Begrenzers (44) mit dem Lagesollwertsignal belegt und der andere Eingang (53) an dem Ausgang (55) des Druckreglers (42) angeschlossen ist und daß der Ausgang (52) des Begrenzers (44) mit dem Sollwerteingang (51) des Lagereglers (43) verbunden ist.

5. Ventil nach Anspruch 4, dadurch gekennzeichnet, daß das Ventilgehäuse (10) drei gesteuerte Anschlußöffnungen (17,18,19) aufweist, von denen die erste zum Anschluß an eine Druckquelle (P), die zweite zum Anschluß an einen Entlastungsraum (T) und die dritte zum Anschluß an einen hydraulischen Arbeitskreis (A) vorgesehen ist, daß der Steuerschieber (25) zwei Steuerkanten (26,27) aufweist, von denen die eine die Verbindung zwischen erster und dritter Anschlußöffnung (17,19) und die zweite die Verbindung zwischen zweiter und dritter Anschlußöffnung (18,19) steuert, und daß die zum Druckaufnehmer (24) führende Anschlußbohrung (23) im Magnetgehäuse (11) mit einem im Ventilgehäuse (10) zu der dritten Anschlußöffnung (19) führenden Druckkanal (22) korrespondiert.

6. Ventil nach Anspruch 5, dadurch gekennzeichnet, daß die erste und die dritte Anschlußöffnung (17,19) über einen Querkanal (20) miteinander in Verbindung stehen, der mittels eines Dichtungselements (21), vorzugsweise Dichtungsschraube, flüssigkeitsdicht absperrbar ist, und daß die dritte Anschlußöffnung (19) von der Anschlußseite her absperrbar ist.

7. Ventil nach Anspruch 5 oder 6, dadurch gekennzeichnet, daß der Steuerschieber (25) axial verschieblich in einer Mittelbohrung (13) des Ventilgehäuses (10) geführt ist und daß von den Anschlußöffnungen (17 - 19) jeweils eine zur Mittelbohrung (13) radiale Steuerbohrung (14 - 16) zu der Mittelbohrung (13) führt und in dieser mündet.

8. Ventil nach Anspruch 7, dadurch gekennzeichnet, daß der Druckkanal (22) für den Druckaufnehmer (24) in der der dritten Anschlußöffnung (19) zugeordneten Steuerbohrung (16) mündet.

9. Ventil nach einem der Ansprüche 5 - 8, dadurch gekennzeichnet, daß das Ventilgehäuse (10) eine ungesteuerte vierte Anschlußöffnung (56) aufweist, an welcher der Druckkanal (22) anschließbar ist.

10. Ventil nach Anspruch 8 und 9, dadurch gekennzeichnet, daß eine von der Anschlußöffnung (56) wegführende Verbindungsbohrung (61 - 63) in der Steuerbohrung (16) nahe der Mündungsstelle des Druckkanals (22) mündet, daß die Mündungsstelle von Verbindungsbohrung (61 - 63) und Druckkanal (22) in einem radialen über die Mittelbohrung (13) hinausgehenden Verlängerungsabschnitt (59) der Steuerbohrung (16) liegt und daß der Verlängerungsabschnitt (59) gegenüber den Mündungsstellen absperrbar ist.

11. Ventil nach einem der Ansprüche 2 - 10, dadurch gekennzeichnet, daß in dem am Magnetgehäuse (11) befestigten Elektronikgehäuse (12) zusätzlich noch der Lageregler (43) sowie weitere Elektronikbauteile, wie Verstärker-Endstufe (45), untergebracht sind.

12. Ventil nach Anspruch 11, dadurch gekennzeichnet, daß das Elektronikgehäuse (12) einen mehrpoligen Anschlußstecker für Stromversorgung und für die Sollwertsignale des Druck- und Lagereglers (42,43) aufweist.

## Claims

1. Proportional valve having a valve housing (10) with connection openings (17, 18, 19), having a control spool (25), which is axially displaceable in a central bore (13) of the valve housing (10), for controlling the connection openings (17, 18, 19), having a proportional magnet (35) which actuates the control spool (25), the magnet armature (34) of which proportional magnet (35) is guided in a pressure tube (36) and its magnet housing (11) is connected to the valve housing (10), having a pressure sensor (24) which is integrated in the magnet housing (11), is acted upon by pressure from a connection opening (19) and generates an electrical output signal proportional to the pressure, and having a pressure controller (42) to which is supplied the electrical output signal of the pressure sensor (24) as the actual pressure value signal and an electrical required pressure value signal corresponding to a specified required pressure, characterized in that a pressure passage (22), which is in connection with the connection opening (19) and extends separately in the valve housing (10) and separated from the control spool (25) and the associated central bore (13), is provided for pressure action on the pressure sensor (24), which pressure passage (22) opens at the joint position of the valve housing and the magnet housing (10, 11) and there communicates with a connection hole (23) extending outside the pressure tube (36) in the magnet housing (11) as far as the pressure sensor (24).

2. Valve according to Claim 1, characterized in that the pressure sensor (24) is inserted in the magnet housing (11) radially from the outside and is covered by an electronics casing (12) placed at the side onto the magnet housing (11) in order to accommodate at least the pressure controller (42).

3. Valve according to Claim 1 or 2, characterized in that a displacement sensor (37) sensing the control spool stroke is integrated in the magnet housing (11), which displacement sensor (37) generates an electrical output signal proportional to the control spool stroke, in that a position controller (43) is provided, to which is supplied the electrical output signal of the displacement sensor (37), as an actual position value signal, and an electrical required position value signal proportional to the specified required position value, and in that the pressure controller and the position controller (42, 43) are connected to one another electrically in such a way that the respective output signal with the smaller electrical setting parameter is the significant one for the proportional magnet (35).

4. Valve according to Claim 3, characterized in that the output of the position controller (43) is connected to the proportional magnet (35) by means of an amplifier stage (45), in that a limiter (44) with two inputs (53, 54) and one output (52) is provided which is configured in such a way that the respectively smallest input signal is switched through to the output (52), that one input (54) of the limiter (44) is occupied by the required position value signal and the other input (53) is connected to the output (55) of the pressure controller (42), and that the output (52) of the limiter (44) is connected to the required value input (51) of the position controller (43).

5. Valve according to Claim 4, characterized in that the valve housing (10) has three controlled connection openings (17, 18, 19), of which the first is provided for connection to a pressure source (P), the second is provided for connection to a relief space (T) and the third is provided for connection to a hydraulic operating circuit (A), in that the control spool (25) has two control edges (26, 27), of which one controls the connection between the first and the third connection opening (17, 19) and the second controls the connection between the second and the third connection opening (18, 19), and in that the connection hole (23), in the magnet housing (11), leading to the pressure sensor (24) corresponds to a pressure passage (22), in the valve housing (10), leading to the third connection opening (19).

6. Valve according to Claim 5, characterized in that the first and the third connection opening (17, 19) are in connection with one another via a transverse passage (20) which can be shut off in a liquid-tight manner by means of a sealing element (21), preferably a sealing screw, and in that the third connection opening (19) can be shut off from the connection end.

7. Valve according to Claim 5 or 6, characterized in that the control spool (25) is guided so that it is axially displaceable in a central bore (13) of the valve housing (10) and in that one control hole (14-16), radial with respect to the central bore (13), respectively leads from the connection openings (17-19) to the central bore (13) and opens into the latter.

8. Valve according to Claim 7, characterized in that the pressure passage (22) for the pressure sensor (24) opens into the control hole (16) associated with the third connection opening (19).

9. Valve according to one of Claims 5-8, characterized in that the valve housing (10) has an uncontrolled fourth connection opening (56) to which the pressure passage (22) can be connected.

10. Valve according to Claims 8 and 9, characterized in that a connecting hole (61-63) leading away from the connection opening (56) opens into the control hole (16) near the emergence position of the pressure passage (22), in that the emergence position of the connecting hole (61-63) and the pressure passage (22) is located in an extension section (59) of the control hole (16) extending radially beyond the central bore (13), and in that the extension section (59) can be shut off from the emergence positions.

11. Valve according to one of Claims 2-10, characterized in that the position controller (43) and further electronics components, such as an amplifier end stage (45), are additionally accommodated in the electronics casing (12) fastened to the magnet housing (11).

12. Valve according to Claim 11, characterized in that the electronics casing (12) has a multi-pole connection plug for the electricity supply and for the required value signals of the pressure controller and position controller (42, 43).

## Revendications

1. Vanne proportionnelle avec un boîtier de vanne (10) présentant des orifices de raccordement (17, 18, 19), avec un tiroir de commande (25) pouvant coulisser axialement dans un perçage médian (13) du boîtier de vanne (10) servant à commander les orifices de raccordement (17, 18, 19), avec un électro-aimant proportionnel (35) actionnant le tiroir de commande (25), dont l'armature (34) passe dans un tube de pression (36) et dont le boîtier (11) est relié au boîtier de la vanne (10), avec un capteur de pression (24) intégré dans le boîtier de l'électro-aimant (11), capteur qui est soumis à la pression d'un orifice de raccordement (19) et engendre un signal de sortie électrique proportionnel à la pression, et avec un régulateur de pression (42) auquel est amené le signal électrique de sortie du capteur de pression (24) en tant que signal de valeur réelle de la pression et un signal électrique de la valeur de consigne de la pression correspondant à une pression de consigne prédéfinie, vanne proportionnelle caractérisée en ce que, pour faire agir la pression sur le capteur de pression (24), on prévoit un canal de pression (22) se trouvant en liaison avec l'orifice de raccordement (19), s'étendant dans le boîtier (10) de la vanne de façon séparée et distincte du tiroir de commande (25) et du perçage médian correspondant (13), canal (22) qui débouche à la jonction du boîtier de la vanne avec le boîtier de l'électro-aimant (10, 11) et qui communique à cet endroit avec un perçage de raccordement (23) s'étendant dans le boîtier (11) de l'électro-aimant jusqu'au capteur de pression (24) en dehors du tube de pression (36).

2. Vanne selon la revendication 1, caractérisée en ce que le capteur de pression (24) est inséré radialement de l'extérieur dans le boîtier (11) de l'électroaimant, et est recouvert par un boîtier électronique (12) monté sur le boîtier (11) de l'électro-aimant et servant à recevoir au moins un régulateur de pression (42).

3. Vanne selon la revendication 1 ou 2, caractérisée en ce que dans le boîtier (11) de l'électro-aimant est intégré un capteur de déplacement (37) détectant la course du tiroir de commande, capteur qui engendre un signal de sortie électrique proportionnel à la course du tiroir de commande, en ce qu'on prévoit un régulateur de position (43), auquel est amené le signal électrique de sortie du capteur de déplacement (37) en tant que signal de valeur réelle de la position, et un signal électrique de valeur de consigne de la position proportionnel à la valeur de consigne prédéfinie de la position, en ce que le régulateur de pression et le régulateur de position (43, 44) sont couplés électriquement l'un à l'autre, et en ce que respectivement le signal de sortie qui a le facteur électrique de régulation le plus petit est prédominant pour l'électroaimant proportionnel (35).

4. Vanne selon la revendication 3, caractérisée en ce que la sortie du régulateur de position (43) est reliée par l'intermédiaire d'un étage d'amplification (45) à l'électro-aimant proportionnel (35), en ce qu'un limiteur (44) est pourvu de deux entrées (53, 54) et d'une sortie (52), limiteur qui est constitué de telle façon que respectivement le signal d'entrée le plus petit soit connecté à la sortie (52), en ce qu'une entrée (54) du limiteur (44) est occupée par le signal de valeur de consigne de la position tandis que l'autre entrée (53) est raccordée à la sortie (55) du régulateur de pression (42), et en ce que la sortie (52) du limiteur (44) est reliée à l'entrée de la valeur de consigne (51) du régulateur de position (43).

5. Vanne selon la revendication 4, caractérisée en ce que le boîtier de vanne (10) présente trois orifices de raccordement commandés (17, 18, 19), dont le premier est prévu pour servir de raccord à une source de pression (P), le second est prévu pour servir de raccord à une chambre de décharge (T) et le troisième est prévu pour servir de raccord à un circuit hydraulique de travail (A), en ce que le tiroir de commande (25) présente deux arêtes de commande (26, 27) dont l'une commande la liaison entre le premier et le troisième orifice de raccordement (17, 19) et dont la seconde commande la liaison entre le deuxième et le troisième orifice de raccordement (18, 19), et en ce que le perçage de raccordement (23) conduisant au capteur de pression (24) correspond à un canal de pression (22) dans le boîtier (10) de la vanne allant au troisième orifice de raccordement (19).

6. Vanne selon la revendication 5, caractérisée en ce que le premier et le troisième orifice de raccordement (17, 19) sont en liaison l'un avec l'autre par l'intermédiaire d'un canal transversal (20) qui peut être obturé au moyen d'un élément d'étanchéité (21), de préférence une vis d'étanchéité, de façon à être étanche aux liquides, et en ce que le troisième orifice de raccordement (19) peut être obturé à partir du côté du raccordement.

7. Vanne selon la revendication 5 ou 6, caractérisée en ce que le tiroir de commande (25) est guidé de façon à coulisser axialement dans un perçage médian (13) du boîtier de vanne (10), et en ce que respectivement un perçage de commande radial (14-16) va des orifices de raccordement (17-19) au perçage médian (13) et débouche dans celui-ci.

8. Vanne selon la revendication 7, caractérisée en ce que le canal de pression (22) pour le capteur de pression (24) débouche dans le perçage de commande (16) correspondant au troisième orifice de raccordement (19).

9. Vanne selon l'une des revendications 5 à 8, caractérisée en ce que le boîtier de vanne (10) présente un quatrième orifice de raccordement non commandé, auquel on peut raccorder le canal de pression (22).

10. Vanne selon les revendications 8 et 9, caractérisée en ce qu'un perçage de liaison (61 à 63) partant de l'orifice de raccordement (56) débouche dans le perçage de commande (16) près de l'embouchure du canal de pression (22), en ce que l'embouchure du perçage de liaison (61 à 63) et du canal de pression (22) se trouve dans une section de prolongation (59), sortant radialement par le perçage médian (13), du perçage de commande (16), et en ce que la section de prolongation (59) peut être observée par rapport aux embouchures.

11. Vanne selon l'une des revendications 2 à 10, caractérisée en ce que, dans le boîtier électronique (12) fixé sur le boîtier de l'électro-aimant (11), sont logés encore en plus le régulateur de position (43) ainsi que d'autres composants électroniques, tels que l'étage final d'amplification (45).)

12. Vanne selon la revendication 11, caractérisée en ce que le boîtier électronique (12) présente une fiche multipolaire de raccordement pour l'alimentation en courant et pour les signaux de valeur de consigne du régulateur de pression et du régulateur de position (42, 43).
